# EUROPÄISCHE PATENTSCHRIFT

(11) **EP 1 757 505 B1**
(45) Veröffentlichungstag und Bekanntmachung des Hinweises auf die Patenterteilung: **19.03.2008**
(21) Anmeldenummer: 06016062.9
(22) Anmeldetag: 02.08.2006
(51) Int. Cl.: B60T 13/66, B60T 7/12, B60T 8/26, B60T 8/1766

(54) **Verfahren zum Betreiben eines Bremsreglersystems eines zweiachsigen Kraftfahrzeugs**
Method of operating a brake control system of a vehicle having two axis
Procédé d'opération d'un système de freinage d'un véhicule à deux essieux

(30) Priorität: 08.08.2005 DE 102005037382
(43) Veröffentlichungstag der Anmeldung: 28.02.2007
(73) Patentinhaber: Bayerische Motoren Werke Aktiengesellschaft, 80809 München (DE)
(72) Erfinder: Foag, Werner, 80935 München (DE); Zimprich, Wolfgang, 85737 Ismaning (DE)

(56) Entgegenhaltungen:
- EP-A1- 1 481 864
- DE-A1- 10 319 663
- DE-A1- 10 324 959
- US-A- 5 941 608

## Beschreibung

Die Erfindung bezieht sich auf ein Verfahren zum Betreiben eines Bremsregelsystems eines zweiachsigen Kraftfahrzeugs, wobei eine erste Achse des Kraftfahrzeugs mittels eines hydraulischen Bremssystems, und eine zweite Achse des Kraftfahrzeugs mittels eines elektromechanischen Bremssystems gebremst wird, nach dem Oberbegriff des Patentanspruchs 1.

Derzeit sind bei zweiachsigen Kraftfahrzeugen Bremsregelsysteme bekannt, die zur fahrdynamischen Stabilisierung des Kraftfahrzeugs die Bremsdrücke an den Rädern modulieren können. Abhängig von der Art der Instabilität kann dies beispielsweise eine Druckverringerung des vom Fahrer angelegten Bremsdrucks sein, falls eines der Räder blockiert. Eine derartige Bremsregelung wird im Rahmen eines sogenannten Anti-Blockier-Systems (ABS) durchgeführt. Zur Verbesserung der Stabilität des Fahrzeugs wird auch beispielsweise im Rahmen einer Antriebsschlupfregelung (ASC, ASR) eine Verringerung des Motormoments vorgenommen, falls im Antriebsfall eines der angetriebenen Räder durchdreht. Falls die Verringerung des Motormoments zur Stabilisierung nicht ausreicht, kann zusätzlich ein aktiver Bremsdruckaufbau vorgenommen werden. Ein Druckaufbau an einem oder mehreren Rädern kann auch im Rahmen einer Stabilitäts-Funktion (DSC, ESP) vorgenommen werden um ein Giermoment aufzuprägen, falls das Gierverhalten des Kraftfahrzeugs zu stark von der Fahrervorgabe abweicht.

Weiter sind Fahrerassistenzsysteme bekannt, die bei Bedarf einen Verzögerungswunsch an das Bremsregelsystem schicken, um beispielsweise die Fahrzeuggeschwindigkeit oder den Abstand zu einem vorausfahrenden Fahrzeug zu regeln. Die daraus resultierenden Druckaufbauten durch das Bremsregelsystem implizieren bei herkömmlichen, pedalverkoppelten Bremssystemen die Notwendigkeit, die Einlass- bzw. Trennventile der ABS, ASC bzw. DSC Hydraulikeinheiten zu trennen, die normalerweise die Bremsbetätigung ― und damit das Bremspedal ― hydraulisch mit der Radbremse verbinden. Tritt der Fahrer in dieser Situation auf das Bremspedal, weil er eine zusätzliche Verzögerung des Kraftfahrzeugs wünscht, findet er ein verhärtetes Bremspedal mit einem deutlich verkürzten Leerweg vor. Dies wird vom Fahrer meist als unangenehm empfunden. Derzeit werden derartige Bremsregelungen mittels hydraulisch, bremspedalverkoppelten Bremssystemen, die sowohl die Vorderachse wie auch die Hinterachse abbremsen, durchgeführt.

Weiter sind jedoch auch Kraftfahrzeuge bekannt, die unterschiedliche Bremssysteme an der Vorderachse und Hinterachse aufweisen. Eine derartige Vorrichtung ist beispielsweise aus der EP 1 481 864 A1 bekannt, bei dem das Kraftfahrzeug mit einer hydraulischen Zweikreisbremsanlage ausgestattet ist. Für fahrerunabhängige Bremseingriffe durch Fahrerassistenzsysteme wird zunächst ein der Hinterachse zugeordnetes elektrohydraulisches Bremssystem aktiviert und für stärkere Fahrzeug-Verzögerungen wird die der Vorderachse zugeordnete elektromotorische Hilfspumpe aktiviert. Erst wenn eine maximale Fahrzeugverzögerung notwenig ist, erfolgt ein zusätzlicher Bremsdruckaufbau mittels einer Rückförderpumpe.

Weiter sind auch Bremsregelsysteme bekannt, bei denen der Bremsdruck für die Räder der Vorderachse durch den vom Fahrer über das Bremspedal und den Bremskraftverstärker aufgebrachten Druck erzeugt wird. Der Bremsdruck auf die Räder an der Hinterachse wird über eine durch elektronische Stellkommandos angesteuerte elektromechanische Bremse erzeugt. Derartige Bremssysteme sind unter der Bezeichnung "Hybridbremse" bekannt. Ein Vorteil solcher Systeme ist, dass der Bremseingriff, soweit er an der by-wire, also der vom Bremspedal entkoppelten elektromechanischen Bremse angesteuerten Hinterachse erfolgt, nicht zu den oben erwähnten Bremspedalirritationen führt. Ein Nachteil ist hierbei jedoch, dass ein reines Bremsen über die Hinterachse zu fahrdynamischen kritischen Zuständen führen kann, die rechtzeitig erkannt und korrigiert werden müssen. Ein Überbremsen der Hinterachse kann über die physikalischen Kraftübertragungsgrenzen am Reifen zum Verlust der Seitenkraftreserven an der Hinterachse und damit möglicherweise zu einer Instabilität des Fahrzeugs führen.

Aus der DE 103 24 959 A1 sind ein Verfahren und eine Vorrichtung zum Betreiben eines Hybrid-Bremssystems bekannt. Hierbei werden während des Betriebs des Kraftfahrzeugs in Abhängigkeit von wenigstens zwei Bremswunschanforderungsgrößen die Bremssysteme derart angesteuert, dass die unterschiedlichen Teilbremssysteme unterschiedliche Beiträge zur Fahrzeugverzögerung liefern.

Aufgabe der Erfindung ist es, ein Verfahren zum Betreiben eines Bremsregelsystems unter Verwendung zweier unterschiedlicher Teilbremssysteme anzugeben, das im Hinblick auf die Fahrstabilität und den Fahrkomfort die beiden Bremssysteme optimal ansteuert.

Diese Aufgabe wird erfindungsgemäß durch ein Verfahren nach Patentanspruch 1 gelöst. Vorteilhafte Weiterbildungen sind die Gegenstände der abhängigen Ansprüche.

Basis der Erfindung ist ein Bremsregelsystem zum Ansteuern einer HybridBremse, bestehend aus einer hydraulischen Bremse an der einen Achse des Kraftfahrzeugs und einer elektromechanischen Bremse an der anderen Achse des Kraftfahrzeugs, wobei das Bremsregelsystem die für das Aufprägen von "fahrerunabhängigen" Bremsungen, die durch sogenannte Bremsmehrwertfunktionen ausgelöst werden, zwei Betriebsarten kennt. Vorteilhafterweise ist das elektromechanische Bremssystem an der Hinterachse des Kraftfahrzeugs und das hydraulische Bremssystem an der Vorderachse des Kraftfahrzeugs angeordnet. Bremsenmehrwertfunktionen können sowohl einen fahrerunabhängigen Bremsdruckaufbau (wie beim ACC), als auch eine von der Fahrervorgabe abweichende Druckmodulation (z.B. für eine Softstop-Funktion) bewirken.

In der ersten Betriebsart wird eine Umsetzung der fahrerunabhängigen Bremsung nur über das elektromechanische Bremssystem an der Hinterachse durchgeführt. Bei der zweiten Betriebsart wird eine Umsetzung der fahrerunabhängigen Bremsung sowohl über das elektromechanische Bremssystem an der Hinterachse, als auch über das hydraulische Bremssystem an der Vorderachse durchgeführt. Die Bremswirkung kann bei einer Bremsung nach der zweiten Betriebsart kontinuierlich zwischen einer Null-Verzögerung und einer Vollverzögerung moduliert werden. Diese zweite Betriebsart ist jedoch in Abhängigkeit von der Pumpen- und Ventilsteuerung nicht geräuschfrei und beeinflusst zudem das Bremspedalgefühl ungünstig.

Diese ungünstigen Nebenwirkungen treten in der ersten Betriebsart des Bremsregelsystems nicht auf. Außer der komfortablen Bremspedalübernahe durch den Fahrer liegt ein weiterer Vorteil der reinen elektromechanischen Bremsung in der auch bei tiefen Temperaturen schnellen, ruck- und geräuschfreien Dosierbarkeit der gewünschten Verzögerung. Aufgrund der Gewichtverteilung des Fahrzeugs und einer dynamischen Achslastverteilung ist jedoch je nach Fahrbahnreibwert nur eine begrenzte Fahrzeugverzögerung möglich.

Um nun die Vorteile beider Betriebsarten optimal nutzen zu können, nimmt das Bremsregelsystem bei Vorliegen des fahrerunabhängigen Bremseingriffsignals erfindungsgemäß zunächst nur einen Bremseingriff in der ersten Betriebsart vor. In dieser ersten Betriebsart werden durch das Bremsregelsystem dann vorgegebene Stabilitätskriterien derart auswertet, dass bei Erkennen eines stabilitätskritischen Zustandes von der ersten Betriebsart in die zweite Betriebsart übergegangen wird.

Der Vorteil der Erfindung liegt somit darin, dass ein fahrerunabhängiger Bremseingriff zunächst nur über das elektromechanische Bremssystem ausgeführt wird. Das Bremsregelsystem verlagert den Bremseingriff nur dann von der ersten Betriebsart in die zweite Betriebsart, wenn die Bremskraft des elektromechanischen Bremssystems nicht für die notwendige Fahrzeugverzögerung ausreicht, oder wenn ein stabilitätskritischer Zustand vorliegt.

Zur Herbeiführung der Entscheidung, wann ein Umschalten von der ersten Betriebsart in die zweite Betriebsart im Hinblick auf die Stabilität des Kraftfahrzeugs notwenig ist, werden ein oder mehrere sogenannter Stabilitätskriterien, bzw. deren aktuell ermittelte Werte, ausgewertet. Somit kann sichergestellt werden, dass kein instabiler, im schlimmsten Fall durch den Fahrer nicht mehr kontrollierbarer Fahrzustand provoziert wird oder gar eintritt.

Vorteilhafterweise werden als vorgegebene Stabilitätskriterien zum Erkennen des stabilitätskritischen Zustandes der Schlupf an mindestens einem der mittels des elektromechanischen Bremssystems gebremsten Räder und/oder die Querbeschleunigung des Kraftfahrzeugs und/oder ein Eingriff einer Schlupfregelfunktion und/oder der Fahrbahnreibwert zumindest eines Rades ausgewertet. Diese Stabilitätskriterien können einzeln oder auch in Kombination miteinander ausgewertet werden. Die Stabilitätskriterien können mittels Sensoren gemessen oder durch Berechnung oder Auswertung vorliegender Daten ermittelt werden.

Vorteilhafterweise wird ein stabilitätskritischer Zustand dann erkannt, wenn der Schlupf an mindestens einem der in der ersten Betriebsart gebremsten Räder einen vorgegebenen Schlupf-Schwellwert überschreitet und/oder wenn die Querbeschleunigung des Kraftfahrzeugs einen vorgegebenen Querbeschleunigungs-Schwellwert überschreitet und/oder sobald eine Schlupfregelfunktion ausgelöst wird und/oder wenn der Fahrbahnreibwert zumindest eines Rades einen vorgegebenen Reib-Schwellwert unterschreitet.

Vorteilhafterweise werden der Schlupf-Schwellwert und/oder der Querbeschleunigungs-Schwellwert und/oder der Reib-Schwellwert in Abhängigkeit von vorgegebenen Parametern des Fahrzeugs unterschiedlich vorgegeben. Somit können die Schwellwerte an die jeweilige Situation des Fahrzeugs bzw. der Fahrzeugumgebung angepasst werden. Diese dynamischen Schwellwerte können beispielsweise in einem Kennfeld hinterlegt werden.

Vor allem im Rahmen einer gekoppelten Auswertung mehrere Stabilitätskriterien erscheinen derart dynamische Schwellen hilfreich. So kann beispielsweise im Sinne einer Schätzung des Fahrbahnreibwertes der Schlupf im Verhältnis zu dem angeforderten Bremsmoment oder der Schlupf zu dem angeforderten Antriebsmoment analysiert werden. So wird bei großen angeforderten Radmomenten mehr Schlupf zugelassen, als bei kleinen Radmomenten, da ein großer Schlupf bei kleinen Radmomenten auf einen niedrigen Fahrbahnreibwert hindeutet.

Anstelle einer Überwachung einer Schwellwertüberschreitung können vorteilhafterweise die genannten Stabilitätskriterien, bspw. der Schlupf an mindestens einem der mittels des elektromechanischen Bremssystems gebremsten Räder, außerdem oder stattdessen bzgl. ihrer Kritikalität bewertet werden. Dabei handelt es sich um Algorithmen, die aus der Historie bzw. dem zeitlichen Verlauf der gemessenen oder anders ermittelten Stabilitätskriterien versuchen, durch eine geeignete Bewertung der aktuell ermittelten Werte des Stabilitätskriteriums deren nahe Zukunft zu schätzen.

In einer besonderen Weiterbildung der Erfindung wird beim Erkennen eines stabilitätskritischen Zustandes zwischen einem leichten stabilitätskritischen Zustand und einem akuten stabilitätskritischen Zustand unterschieden. Wird ein leichter stabilitätskritischer Zustand erkannt, erfolgt ein langsames und im Hinblick auf den Komfort optimales Umschalten in die zweite Betriebsart. Wird hingegen ein akuter stabilitätskritischer Zustand erkannt, erfolgt ein schnelles und im Hinblick auf die Stabilität optimales Umschalten in die zweite Betriebsart.

Um sowohl einen leichten stabilitätskritischen Zustand, wie auch einen akuten stabilitätskritischen Zustand erkennen zu können, sind einem Stabilitätskriterium vorteilhafterweise zumindest zwei Schwellwerte zugeordnet, wobei der erste Schwellwert auf einen leichten stabilitätskritischen Zustand und der zweite Schwellwert auf einen akuten stabiltiskritischen Zustand hinweist. Ein leichter stabilitätskritischer Zustand wird erkannt, wenn das Stabilitätskriterium den ersten Schwellwert überschreitet und ein akuter stabilitätskritischer Zustand wird erkannt, wenn das Stabilitätskriterium den zweiten Schwellwert überschreitet.

Anstelle der mehrstufigen Umlagerungsschwellen bei den jeweiligen Stabilitätskriterien kann auch eine kombinierte Auswertung mehrere Kriterien mit einer vorgegebenen Gewichtung der einzelnen Stabilitätskriterien erfolgen. So wird beispielsweise ein akuter stabilitätskritischer Zustand erkannt und darauf hin ein sofortiges Umschalten in die zweite Betriebsart vorgenommen, sobald eine Schlupfregelfunktion, beispielsweise ein Anti-Blockier-System oder ein Stabilitätskontrollsystem in die Bremsregelung eingreift oder wenn mindestens zwei andere der vorgegebenen Stabilitätskriterien gleichzeitig oder für einen längeren Zeitraum eine vorgegebene Schwelle überschreiten.

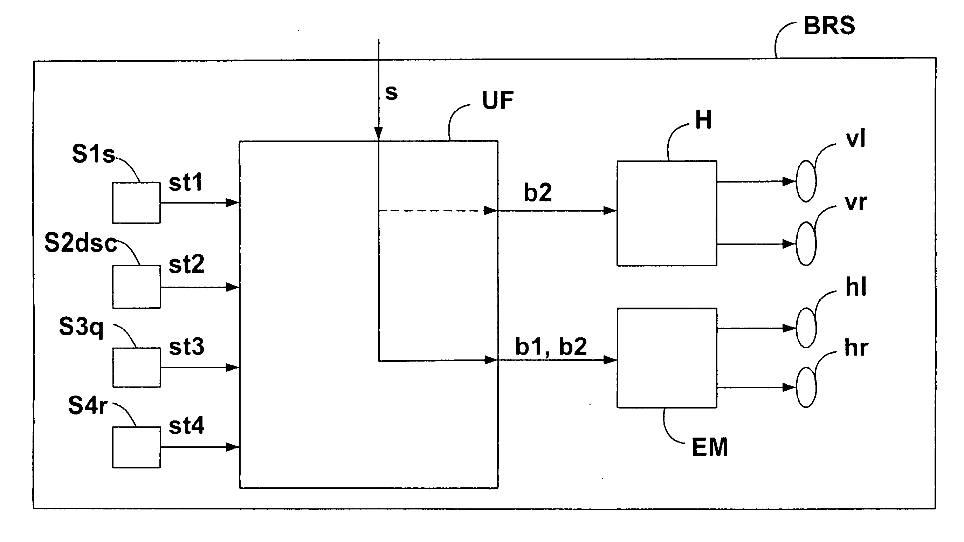

In der Zeichnung ist ein Ausführungsbeispiel der Erfindung dargestellt.

Die einzige Figur zeigt eine Anordnung zur Durchführung des erfindungsgemäßen Verfahrens. Ein Bremsregelsystem BRS, in das eine Umlagerungsfunktion integriert ist, erhält unter anderem ein fahrerunabhängiges Bremseingriffssignal s von einer hier nicht dargestellten Bremsmehrwertfunktion. Bei einer Bremsmehrwertfunktion kann es sich beispielsweise um eine Adaptive Cruise Control Funktion (ACC), eine Softstop-Funktion oder eine andere Funktion handeln, die ein Bremseingriffsignal s, abweichend von der Fahrervorgabe, aussendet.

Die Umlagerungsfunktion UF kann auf das Bremseingriffssignal s einen Bremseingriff auf zwei unterschiedliche Betriebsarten, b1 und b2 vornehmen. In der ersten Betriebsart b1 wird nur das elektromechanische Bremssystem EM angesteuert. Im vorliegenden Ausführungsbeispiel steuert das elektromechanische Bremssystem EM die Bremsen der beiden Räder hl und hr an der Hinterachse an. In der zweiten Betriebsart b2 wird zusätzlich zum elektromechanischen (Teil-)Bremssystem EM zum Bremsen der beiden Räder hl und hr der Hinterachse auch ein hydraulisches (Teil-)Bremssystem H zum Bremsen der beiden Räder vl und vr der Vorderachse angesteuert.

Neben dem Bremseingriffssignal s erhält das Bremsregelsystem BRS bzw. die im Bremsregelsystem integrierte Umlagerungsfunktion UF noch weitere Eingangssignale st1, st2, st3 und st4. Die Eingangssignale st1, st2, st3 und st können auch durch ein im Bremsregelsystem BRS integriertes Bremssteuergerät berechnet werden. Bei diesen weiteren Eingangssignalen st1, st2, st3 und st4 handelt es sich um aktuell ermittelte Wert von vorgegebenen Stabilitätskriterien, durch deren Auswertung ein stabilitätskritischer Zustand des Kraftfahrzeugs erkannt werden kann.

Bei dem Stabilitätskriterium st1 handelt es sich um den mittels einer Radgeschwindigkeitsmesseinheit S1s durch Auswertung eines Raddrehzahlfühlers S1s ermittelten Schlupf an den mittels des elektromechanischen Bremssystems EM gebremsten Rädern hl und hr an der Hinterachse des Kraftfahrzeugs. Bei dem Stabilitätskriterium st2 handelt es sich um ein Eingriffssignal einer Schlupfregelfunktion, das von einer Schlupfregelfunktionseinheit S2dsc ausgesendet wird, wenn diese eingreift. Bei der Schlupfregelfunktion handelt es sich beispielsweise um ein ASC oder DSC. Bei dem Stabilitätskriterium st3 handelt es sich um die Querbeschleunigung des Kraftfahrzeugs, die mittels eines Querbeschleunigungssensors S3q ermittelt werden kann. Bei dem Sicherheitskriterium st4 handelt es sich um den Fahrbahnreibwert zwischen der Fahrbahn und den Rädern vl, vr, hl und hr. Dieser Fahrbahnreibwert, bzw. die vier Fahrbahnreibwerte werden aus verschiedenen, hier nicht dargestellten Betriebsbedingungen des Kraftfahrzeugs in der Fahrbahnreibwert-Einheit S4r ermittelt. Es können auch noch weitere Mess- und Rechengrößen für das oben beschriebene Verfahren verwendet werden, ohne den Inhalt der Patentansprüche zu verlassen.

Das hier dargestellte Bremsregelsystem BRS, das auf das fahrerunabhängige Bremseingriffsignal s einen Bremseingriff auf zwei unterschiedliche Betriebsarten b1 und b2 vornehmen kann, wird wie folgt betrieben:

Liegt das fahrerunabhängige Bremseingriffssignal s an der Bremsregeleinheit BRS bzw. an der Umlagerungsfunktion UF an, wird zunächst ein automatischer Bremseingriff in der ersten Betriebsart b1 vorgenommen. In dieser ersten Betriebsart b1 werden dann die an der Umlagerungsfunktion UF anliegenden aktuell ermittelten Werte der Stabilitätskriterien st1, st2, st3 und st4 derart auswertet, dass bei Erkennen eines stabilitätskritischen Zustandes aus den Werten der Stabilitätskriterien st1, st2, st3 und st4, von der ersten Betriebsart b1 in die zweite Betriebsart b2 umgeschaltet wird.

Ein stabilitätskritischer Zustand wird bspw. erkannt, wenn der Schlupf st1 an mindestens einem der in der ersten Betriebsart b1 gebremsten Räder hl und hr einen vorgegebenen Schlupf-Schwellwert überschreitet und/oder wenn die Querbeschleunigung st3 des Kraftfahrzeugs einen vorgegebenen Querbeschleunigungs-Schwellwert überschreitet und/oder sobald eine Schlupfregelfunktion st2 ausgelöst wird und/oder wenn der Fahrbahnreibwert st4 zumindest eines Rades vl, vr, hl, oder hr einen vorgegebenen Reib-Schwellwert unterschreitet.

## Patentansprüche

1. Verfahren zum Betreiben eines Bremsregelsystems eines zweiachsigen Kraftfahrzeugs, wobei eine erste Achse des Kraftfahrzeugs mittels eines hydraulischen Bremssystems, und eine zweite Achse des Kraftfahrzeugs mittels eines elektromechanischen Bremssystems gebremst wird und wobei das Bremsregelsystem auf ein fahrerunabhängiges Bremseingriffsignal einen Bremseingriff auf zwei unterschiedliche Betriebsarten vornehmen kann, wobei in der ersten Betriebsart nur das elektromechanische Bremssystem und in der zweiten Betriebsart das elektromechanische Bremssystem und das hydraulische Bremssystem angesteuert werden, **dadurch gekennzeichnet, dass** das Bremsregelsystem (BRS) bei Vorliegen des fahrerunabhängigen Bremseingriffsignals (s) zunächst einen Bremseingriff in der ersten Betriebsart (b1) vornimmt und in dieser ersten Betriebsart (b1) aktuell ermittelte Werte von vorgegebenen Stabilitätskriterien (st1, st2, st3, st4) derart auswertet, dass bei Erkennen eines stabilitätskritischen Zustandes von der ersten Betriebsart (b1) in die zweite Betriebsart (b2) übergegangen wird.

2. Verfahren nach Patentanspruch 1, **dadurch gekennzeichnet, dass** als vorgegebene Stabilitätskriterien (st1, st2, st3, st4) zum Erkennen des stabilitätskritischen Zustandes der Schlupf (st1) an mindestens einem der mittels des elektromechanischen Bremssystems (EM) gebremsten Räder (hl, hr) und/oder die Querbeschleunigung (st3) des Kraftfahrzeugs und/oder ein Eingriff (st2) einer Schlupfregelfunktion und/oder der Fahrbahnreibwert (st4) zumindest eines Rades (vl, vr, hl, hr) ausgewertet werden.

3. Verfahren nach Patentanspruch 2, **dadurch gekennzeichnet, dass** der Fahrbahnreibwert (st4) eines Rades (vl, vr, hl, hr) aus dem Verhältnis von Schlupf und angefordertem Bremsmoment oder Schlupf und angefordertem Antriebsmoment an dem Rad (vl, vr, hl, hr) ermittelt wird.

4. Verfahren nach einem der vorangegangenen Patentansprüche, **dadurch gekennzeichnet, dass** ein stabilitätskritischer Zustand erkannt wird, wenn der Schlupf (st1) an mindestens einem der in der ersten Betriebsart b1 gebremsten Räder (hl, hr) einen vorgegebenen Schlupf-Schwellwert überschreitet und/oder wenn die Querbeschleunigung (st3) des Kraftfahrzeugs einen vorgegebenen Querbeschleunigungs-Schwellwert überschreitet und/oder sobald eine Schlupfregelfunktion ausgelöst (st2) wird und/oder wenn der Fahrbahnreibwert (st4) zumindest eines Rades einen vorgegebenen Reib-Schwellwert unterschreitet.

5. Verfahren nach Patentanspruch 4, **dadurch gekennzeichnet, dass** der Schlupf-Schwellwert und/oder der Querbeschleunigungs-Schwellwert und/oder der Reib-Schwellwert in Abhängigkeit von vorgegebenen Betriebsparametern des Fahrzeugs vorgegeben wird.

6. Verfahren nach einem der vorangegangenen Patentansprüche, **dadurch gekennzeichnet, dass** zumindest ein Stabilitätskriterium (st1, st2, st3, st4) über einen vorgegebenen Zeitraum bewertet und gespeichert wird, und in Abhängigkeit vom bewerteten und/oder gespeicherten Stabilitätskriterium (st1, st2, st3, st4) ein stabilitätskritischer Zustand erkannt wird.

7. Verfahren nach einem der vorangegangenen Patentansprüche, **dadurch gekennzeichnet, dass** beim Erkennen eines stabilitätskritischen Zustandes zwischen einem leichten stabilitätskritischen Zustand und einem akuten stabilitätskritischen Zustand unterschieden wird, und dass beim Erkennen eines leichten stabilitätskritischen Zustandes ein langsames und im Hinblick auf den Komfort optimales Umschalten in die zweite Betriebsart (b2) erfolgt und dass beim Erkennen eines akuten stabilitätskritischen Zustandes ein schnelles und im Hinblick auf die Stabilität optimales Umschalten in die zweite Betriebsart (b2) erfolgt.

8. Verfahren nach Patentanspruch 7, **dadurch gekennzeichnet, dass** einem Stabilitätskriterium (st1, st2, st3, st4) zumindest zwei Schwellwerte zugeordnet sind und dass der leichte stabilitätskritische Zustand erkannt wird, wenn das Stabilitätskriterium (st1, st2, st3, st4) den ersten Schwellwert überschreitet und dass der akuten stabilitätskritischen Zustand erkannt wird, wenn das Stabilitätskriterium (st1, st2, st3, st4) den zweiten Schwellwert überschreitet.

9. Verfahren nach Patentanspruch 7, **dadurch gekennzeichnet, dass** der akute stabilitätskritische Zustand erkannt wird, sobald eine Schlupfregelfunktion eingreift (st2).

## Claims

1. A method for operating a brake control system of a two-axle motor vehicle, a first axle of the vehicle being braked by a hydraulic brake system, and a second axle of the vehicle being braked by an electromechanical brake system
and, upon a driver-independent brake intervention signal, the brake control system being capable of carrying out a braking intervention in two different types of operation, wherein in the first type of operation, only the electromechanical brake system is activated and in the second type of operation, the electromechanical brake system and the hydraulic brake system are activated, **characterised in that** when the driver-independent brake intervention signal (s) is present, the brake control system (BRS) initially carries out a brake intervention in the first type of operation (b1) and in this first type of operation (b1), currently determined values of predetermined stability criteria (st1, st2, st3, st4) are evaluated such that upon detection of a stability-critical condition, the system changes over from the first type of operation (b1) to the second type of operation (b2).

2. A method according to claim 1, **characterised in that** the slip (st1) on at least one of the wheels (hl, hr) braked by the electromechanical brake system (EM) and/or the lateral acceleration (st3) of the vehicle and/or an intervention (st2) of a slip control function and/or the road friction coefficient (st4) of at least one wheel (vl, vr, hl, hr) are evaluated as predetermined stability criteria (st1, st2, st3, st4) for detecting the stability-critical condition.

3. A method according to claim 2, **characterised in that** the road friction coefficient (st4) of a wheel (vl, vr, hl, hr) is determined from the relationship of slip and required brake torque or slip and required drive torque on the wheel (vl, vr, hl, hr).

4. A method according to any one of the preceding claims, **characterised in that** a stability-critical condition is detected if the slip (st4) on at least one of the wheels (hl, hr) braked in the first type of operation (b1) exceeds a predetermined slip threshold value and/or if the lateral acceleration (st3) of the vehicle exceeds a predetermined lateral acceleration threshold value and/or as soon as a slip control function is triggered (st2) and/or if the road friction coefficient (st4) of at least one wheel falls below a predetermined friction threshold value.

5. A method according to claim 4, **characterised in that** the slip threshold value and/or the lateral acceleration threshold value and/or the friction threshold value is predetermined as a function of predetermined operating parameters of the vehicle.

6. A method according to any one of the preceding claims, **characterised in that** at least one stability criterion (st1, st2, st3, st4) is assessed over a predetermined period of time and is stored, and a stability-critical condition is detected as a function of the assessed and/or stored stability criterion (st1, st2, st3, st4).

7. A method according to any one of the preceding claims, **characterised in that** when a stability-critical condition is detected, a distinction is made between a low stability-critical condition and an acute stability-critical condition and **in that** upon detection of a low stability-critical condition, the system switches over slowly and in optimum manner in respect of comfort and convenience to the second type of operation (b2) and if an acute stability-critical condition is detected, the system switches over quickly and in optimum manner in respect of stability to the second type of operation (b2).

8. A method according to claim 7, **characterised in that** at least two threshold values are associated with a stability criterion (st1, st2, st3, st4), and **in that** the low stability-critical condition is detected if the stability criterion (st1, st2, st3, st4) exceeds the first threshold value and **in that** the acute stability-critical condition is detected if the stability criterion (st1, st2, st3, st4) exceeds the second threshold value.

9. A method according to claim 7, **characterised in that** the acute stability-critical condition is detected as soon as a slip control function intervenes (st2).

## Revendications

1. Procédé de gestion d'un système de régulation de freinage d'un véhicule automobile à deux essieux selon lequel on freine un premier essieu du véhicule avec un système de freins hydrauliques et un second essieu du véhicule à l'aide d'un système de freins électromécaniques, et
le système de régulation de frein peut effectuer une action de freinage sur un signal d'action de frein indépendant du conducteur pour deux modes de fonctionnement différents, et
dans le premier mode de fonctionnement, seul le système de frein électromécanique agit et dans le second mode de fonctionnement, le système de frein électromécanique et le système de frein hydraulique sont commandés,
**caractérisé en ce qu'**
en présence d'un signal d'action de frein indépendant du conducteur (s), le système de régulation de frein (BRS) effectue tout d'abord une action de freinage selon le premier mode de fonctionnement (b1) et exploite dans ce premier mode de fonctionnement (b1) les valeurs actuelles déterminées des critères de stabilité prédéfinis (st1, st2, st3, st4) de façon qu'en reconnaissant un état critique du point de vue de la stabilité, on passe du premier mode de fonctionnement (b1) au second mode de fonctionnement (b2).

2. Procédé selon la revendication 1,
**caractérisé en ce que**
comme critères de stabilité prédéfinis (st1, st2, st3, st4) pour reconnaître un état critique du point de vue de la stabilité, on exploite le patinage (st1) sur au moins l'une des roues (hl, hr) freinées par le système de frein électromécanique (EM) et/ou l'accélération transversale (st3) du véhicule automobile et/ou une action (st2) d'une fonction de régulation de patinage et/ou le coefficient d'adhérence de la chaussée (st4) d'au moins une roue (vl, vr, hl, hr).

3. Procédé selon la revendication 2,
**caractérisé en ce que**
le coefficient d'adhérence de la chaussée (st4) d'une roue (vl, vr, hl, hr) se détermine à partir du rapport entre le patinage et le couple de freinage demandé ou le patinage et le couple d'entraînement demandé à la roue (vl, vr, hl, hr).

4. Procédé selon l'une quelconque des revendications précédentes,
**caractérisé en ce qu'**
on reconnaît un état critique du point de vue de la stabilité si le patinage (st1) d'au moins l'une des roues (hl, hr) freinées dans le premier mode de fonctionnement (b1) dépasse un seuil de patinage prédéfini et/ou si l'accélération transversale (st3) du véhicule automobile dépasse un seuil d'accélération transversale prédéfini, et/ou dès qu'une fonction de régulation de patinage (st2) est déclenchée, et/ou si le coefficient d'adhérence de la chaussée (st4) d'au moins une roue passe en dessous d'un seuil de friction prédéfini.

5. Procédé selon la revendication 4,
**caractérisé en ce qu'**
on prédéfinit le seuil de patinage et/ou le seuil d'accélération transversale et/ou le seuil de friction en fonction de paramètres de fonctionnement prédéfinis du véhicule.

6. Procédé selon l'une quelconque des revendications précédentes,
**caractérisé en ce qu'**
on exploite au moins un critère de stabilité (st1, st2, st3, st4) dans une durée prédéfinie et on mémorise ce critère et en fonction du critère de stabilité exploité et/ou mémorisé (st1, st2, st3, st4), on reconnaît un état critique pour la stabilité.

7. Procédé selon l'une quelconque des revendications précédentes,
**caractérisé en ce qu'**
en reconnaissant un état critique du point de vue de la stabilité on distingue entre un état critique léger pour la stabilité et un état sérieux critique pour la stabilité, et en reconnaissant un état critique léger pour la stabilité, on commute lentement et de façon optimale du point de vue du confort vers le second mode de fonctionnement (b2), alors qu'en reconnaissant un état critique sérieux pour la stabilité, on a une commutation rapide et optimale du point de vue de la stabilité vers le second mode de fonctionnement (b2).

8. Procédé selon la revendication 7,
**caractérisé en ce qu'**
à un critère de stabilité (st1, st2, st3, st4) on associe au moins deux seuils, et on reconnaît l'état critique léger de stabilité si le critère de stabilité (st1, st2, st3, st4) dépasse le premier seuil, et on reconnaît l'état critique sérieux de stabilité si le critère de stabilité (st1, st2, st3, st4) dépasse le second seuil.

9. Procédé selon la revendication 7,
**caractérisé en ce qu'**
on reconnaît l'état critique sérieux de stabilité dès qu'une fonction de régulation de patinage (st2) est activée.
